# EUROPEAN PATENT APPLICATION

(11) **EP 3 751 071 A1**
(43) Date of publication of application: **16.12.2020**
(21) Application number: 19179660.6
(22) Date of filing: 12.06.2019
(51) Int. Cl.: E04D 1/04, E04D 1/30, H02S 20/25, B28B 5/02, B28B 11/10, B28B 13/02

(54) **ROOFING TILE ADAPTED FOR A FLAT SOLAR CELL PANEL AND METHOD FOR PRODUCING SUCH ROOFING TILE**

(71) Applicant: S:t Eriks AB, 245 34 Staffanstorp (SE)
(72) Inventor: GUSTAFSSON, Mikael, 512 76 Hillared (SE)
(74) Representative: Bergenstråhle Group AB

(57) **Abstract**

Disclosed is a roofing tile (1), a system and a method concerning a roofing tile (1), made of concrete or clay, and which is adapted for a flat solar cell panel (50). The roofing tile (1) comprises at least one wave crest (10, 12) and at least one wave trough (20, 22) extending in a length direction (X) of the roofing tile (1), wherein a cross-section along a width direction (Y) is wave-shaped, and the at least one wave crest (10, 12) has a first length (Lx) in the length direction (X), and at least one of the at least one wave crest (10, 12) comprises a flat top portion (10a, 12a) which has a second length (L_{F}) in the length direction (X) of the roofing tile.

## Description

### Technical field

The invention considers a wave-shaped roofing tile made of concrete or clay, which roofing tile is adapted for a flat solar cell panel and the invention further considers a system comprising such roofing tile with a solar cell panel as well as a method for producing such wave-shaped roofing tile made of concrete or clay.

### Background art

Roofing tiles made of concrete or clay exists in both flat and wave-shaped designs, or in a mix of flat areas and curved edges or parts of the tile. It is also known to apply a flat solar cell on a flat roofing tile or at a flat area of the roofing tile which area has the dimensions of the flat solar cell. Further, it is well known to apply curved solar cells at for example curved steel sheet roofing panels or steel sheet roofing tiles. From now on and through this application the term "solar cell panel" will be used to describe a unit applied on roofing tiles in the form of panels with solar cells. Other terms used for the same product might be solar panels, photovoltaics, photovoltaic cells etc.

One problem with known art concerns the efficiency of the solar cells or solar cell panels when applied on a roofing tile. A high-end solar cell panel for this use may have a theoretical efficiency of around 20%, but when mounted on the roofing tile, the efficiency decreases. This normally depends on how the solar cell is applied to the tile and one important factor is the ability to keep as low temperature around the solar cell panel as possible. The most common roofing tile for solar cell panel, when it comes to tiles made of concrete or clay, are tiles with a flat area corresponding to the area of the solar cell panel, onto which area the solar cell panel is applied. This means firstly that the solar cell panel is attached directly to the flat surface, for example by glue or the like, why there is no possibility to have circulating air under the solar cell panel. Secondly, the roofing with flat tiles have a higher temperature between the roofing tiles and the substrate (the roofing felt/the underlying construction) compared to a roofing with wave-shaped roofing tiles. A higher temperature means lower efficiency of the solar cells, why often a high end solar cell panel is needed to have a good enough efficiency of the total installation. This drives high production cost and an expensive end-product.

Another drawback which effects the cost is that in prior art solutions, it is time-consuming to glue the solar cell onto the tile and often it is a manual or partly manual job, which drives the production cost. And since the roofing tiles normally occurs in different colors, the glue normally must have the same color as the tile to look good and have an attractive overall look of the roofing tile.

### Summary of the invention

It is an object of the invention to address at least some of the problems and issues outlined above. It is possible to achieve these objects and others by using a roofing tile and a method and a as defined in the attached independent claims.

According to an aspect of the invention, a roofing tile made of concrete or clay adapted for a flat solar cell panel is disclosed. The roofing tile has a length direction and a width direction and comprises a front side and a back side which extends in the width direction. Further the roofing tile comprises a first long side and a second long side which extends in the length direction between the front side and the back side. At least one wave crest and at least one wave trough extends in the length direction, wherein a cross-section along the width direction is wave-shaped, and wherein the at least one wave crest has a first length in the length direction of the roofing tile, and at least one of the at least one wave crest comprises a flat top portion which has a second length in the length direction of the roofing tile.

Such a roofing tile is particularly well suited for applying a flat solar cell panel which firstly enables a look of the roofing tile which is very similar with an ordinary wave-shaped roofing tile, secondly it has an underside facing the roofing felt/the underlying construction which is just the same as an ordinary roofing tile which is not adapted for the flat solar cell panel, and finally, the keeping of the wave-shape with only flat surface (surfaces) at the wave-crest (or crests) gain high performance of the solar cells due to good cooling. The latter is good cooling both around the roofing tile itself and also good cooling around the flat solar cell panel, which means that to gain the same power output as flat prior art roofing tile with high-end solar cell panels, a cheaper solar cell panel may be used. Another option is to use a high-end solar cell panel and gain a higher output per square meter of the roof compared to prior art. To keep the wave-shape look of the roofing tile is important, because in many markets, the wave-shaped roofing tile is the most popular, and further, by having an underside which is similar to an ordinary roofing tile, it is possible to convert a standard roof to a solar cell roof without changing the roofing felt, i.e. the underlying construction. No prior art solution provides the possibility to install integrated solar cell panels on wave-shaped roofing tiles which are possible to apply on an existing roofing felt. By the inventive roofing tile, the total cost is kept low as well as the installed power output per square meter is higher compared to flat solar cell roofing tiles.

According to an embodiment, the second length of the flat portion is shorter than the first length of the at least one wave crest. This means that the overall design of the roofing tile is kept as much as possible as a normal roofing tile, with flat portion/portions only where necessary for a good integration of the solar cell panel onto the roofing tile. This means that the overall impression of the roof may be kept as a roof with wave-shaped roofing tiles despite the flat solar cell panels.

According to an embodiment, the flat top portion of the at least one wave crest is arranged with a front end at a first distance from the front side of the roofing tile. To start with the flat portion a distance from the front side/front end of the roofing tile means the so-called "bull-nose" is kept unaffected, which is important for the total impression of the roof, when standing on the ground and looking up on the roof. The roof substantially keeps it wave-shaped look.

According to an embodiment, the flat top portion of the at least one wave crest is arranged with a back end at a second distance from the back side of the roofing tile. To end with the flat portion a distance from the back side/ back end of the roofing tile means that the solar cell panel is arranged at the visible part of the roofing tile for maximum exposure to the sun without affecting the standard construction of the roofing tile system with placing the next row of tiles on top of the back end of the roofing tiles of the former row.

According to an embodiment, the roofing tile comprises a hole arranged for solar cell cabling through the same. It is preferred to provide a hole through the roofing tile for cabling since the standard construction of the roofing tile system is not affected by the cabling. All solar cell panels must of course be connected to a cable system for the collection of the power and the transfer of the energy to "heart" of the system, and by designing the roofing tile to fit a standard roofing felt is positive for the cost.

According to a preferred embodiment, the hole is arranged at the flat portion of the at least one wave crest. This means that the hole is provided in a crest and not a trough which is important due to water transport on the roofing tiles, where of course most rainwater is transported in the wave troughs. Of course, when fitting a solar cell panel onto the flat portions, seals or glue or the like may be arranged around the hole to prevent water from leaking through the cabling hole.

According to an embodiment, at least one of the first and second long sides of the roofing tile comprises a support arranged for supporting a long side of a solar cell panel. The support extends in the length direction a third length that is the same length or longer than as the second length of the flat portion of the at least one wave crest. Normally, a standard roofing tile already comprises a couple of upwardly protruding flanges along one long side and a couple of downwardly protruding flanges on the opposite long side. These flanges work as "sealings" or "connectors" between two adjacent roofing tiles by that the upward flanges of one roofing tile are arranged to fit with the downward flanges of the adjacent roofing tile to connect the tiles to each other. The inventive roofing tile has an added "flange"/support for creating a support for the long side of the solar cell panel which faces the upwardly protruding flanges. By this, the solar cell panel is supported on the flat portion of the crest/crests and on the support.

According to another aspect of the invention, a system comprises at least one roofing tile according to any of the above presented embodiments and further a flat solar cell panel mounted on a flat top portion of the at least one wave crest of the at least one roofing tile.

Such a system provides an inventive and new wave-shaped roofing tile with a flat solar cell panel integrated on it, which firstly enables a look of the roofing tile which is very similar with an ordinary wave-shaped roofing tile, secondly it has an underside facing the roofing felt/the underlying construction which is just the same as an ordinary roofing tile (which is not adapted for the flat solar cell panel) and finally, the keeping of the wave-shape with only flat surface (surfaces) at the wave-crest (or crests) gain high performance of the solar cells due to good cooling, as explained above.

According to another aspect of the invention, a method for producing roofing tiles made of concrete or clay is disclosed, which roofing tiles are adapted for flat solar cell panels, wherein each roofing tile has a length direction and a width direction. The method comprises receiving at least one non-cured roofing tile which comprises a front side and a back side which sides extends in the width direction, and a first long side and a second long side, which extends in the length direction between the front side and the back side. The non-cured roofing tile further comprises at least one wave crest and at least one wave trough which extends in the length direction, wherein a cross-section along the width direction is wave-shaped, and wherein the at least one wave crest has a first length in the length direction of the roofing tile. The method further comprises, after the receiving, forming a flat top portion of the at least one wave crest by pressing along a second length of the at least one wave crest in the length direction of the at least one non-cured roofing tile, wherein the pressing forms the flat top portion of the at least one wave crest with the second length. The method further comprises, after the pressing, curing the adapted roofing tile.

Such a method enables the production of a roofing tile adapted for a flat solar cell panel according to substantially the same process and process flow, and at very high speed, as when producing standard concrete or clay roofing tiles. This means that the production cost is kept very low compared to prior art "solar tiles". One example of standard process will be described in the detailed description below. The step of forming a flat portion of at least one, or preferably of both wave-crests if a standard two-wave-crest roofing tile is produced, may be a part of the high-speed process for producing roofing tiles with high efficiency and low cost, for example by that a heated roller which runs with the same or faster rotation speed as the process speed, is lowered a controlled amount of time/distance over a passing mold of a non-cured standard roofing tile for forming the adapted roofing tile. After the forming of the flat portion along a wanted distance of the tile, the roller is raised again. The speed of the process is not affected and there is no need of building a separate production line only for roofing tiles adapted for solar cell panels, which is the case for prior art solutions, why the production cost will be kept low.

According to an embodiment, the pressing of the flat portion starts at a first distance from a front side of the roofing tile, such as the wave-shaped is unaffected from the front side and along the first distance of the roofing tile. This means that the so-called "bull-nose" is kept unaffected, which is important for the total impression of the roof, when standing on the ground and looking up on the roof. By that, the roof substantially keeps it wave-shaped look.

According to an embodiment, the pressing ends at a second distance from a back side of the roofing tile, such as the wave-shaped is unaffected along the second distance to the back side of the roofing tile. This means that the flat portion only is provided for the area where the solar cell panel is arranged, and that the visible part of the roofing tile has a maximum exposure to the sun without affecting the standard construction of the roofing tile system with placing the next row of tiles on top of the back end of the roofing tiles of the former row.

According to an embodiment, the pressing is performed with at least one roller. The roller may be lowered and raised in a controlled manner to produce the flat portion along a preferred distance of the wave crest/crests.

According to an embodiment, the roller is heated. By heating the roller, the non-cured clay or concrete will not adhere to the roller. The heating may by for example infrared heating, induction, hot water inside the roller etc. By the heating of the roller, the production speed may be maintained with maintained quality of the roofing tile and a smooth finish of the flat surface.

According to an embodiment, the method further comprises that, before the step of receiving, producing the non-cured roofing tile having the wave-shape by moving a wave-shaped roller over a mold filled with non-cured concrete or clay material. As mentioned above, the step of receiving and forming the flat surface of the at least one wave crest is incorporated as a step in the process for producing a standard (not adapted for a solar cell panel) roofing tile, why the steps before, as well as after the adaption steps, may be incorporated into the method.

According to an embodiment, the method further comprises that, before the step of receiving, punching a hole in the non-cured roofing tile having the wave-shape. The punching step is also introduced as an added step in the process for producing a standard (not adapted for a solar cell panel) roofing tile, why the process for producing an adapted roofing tile is very cost efficient and rapid. The punching of the hole may be correlated with a production step of cutting the tiles into individual tiles which may be a part of the standard process when producing roofing tiles of concrete or clay, and by that the process is not slowed down by the step of punching the hole.

Further possible features and benefits of this solution will become apparent from the detailed description below.

### Brief description of drawings

The solution will now be described in more detail by means of exemplary embodiments and with reference to the accompanying drawings, in which:
Fig. 1a is a perspective view showing a roofing tile according to the invention, which is adapted for a flat solar cell panel.
Fig. 1b is a perspective view showing the roofing tile of Fig. 1a with a solar cell panel mounted thereon.
Fig. 1c is a front view of the roofing tile of Fig. 1b.
Fig. 2 is a conceptual figure showing the main steps in a production process for producing the roofing tile of Fig. 1a according to the inventive method.
Fig. 3 is a is a flow chart illustrating a method for producing the roofing tile of Fig. 1a.

### Detailed description

Briefly described, a wave-shaped roofing tile made of concrete or clay, adapted for a flat solar cell, is disclosed and also a method for producing such roofing tile. The roofing tile and the method is designed to fit a full-speed standard production process for roofing tiles, by adding a few production steps which not slow down the speed of the production process.

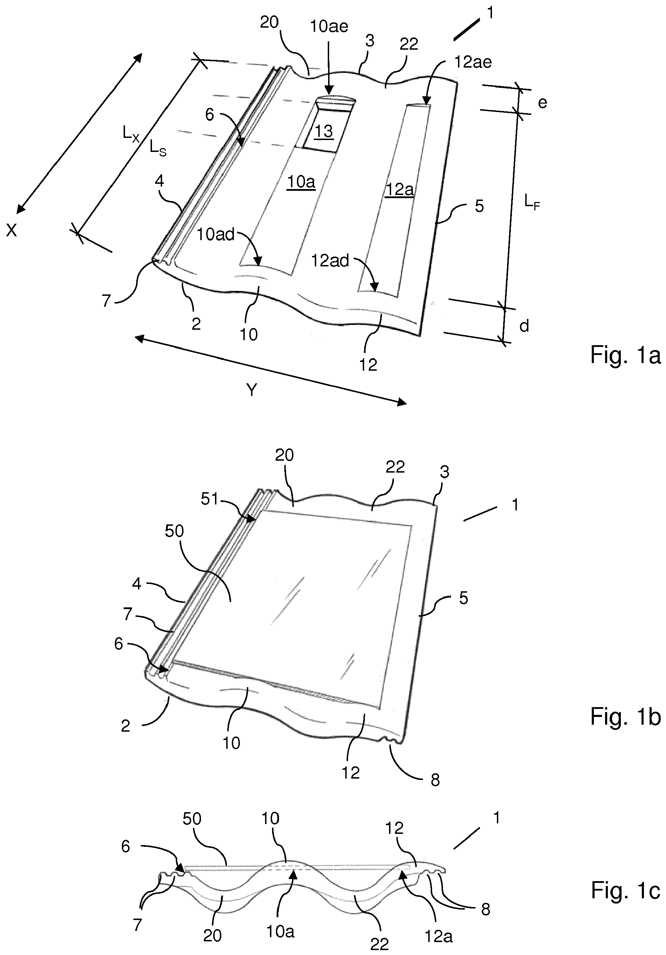

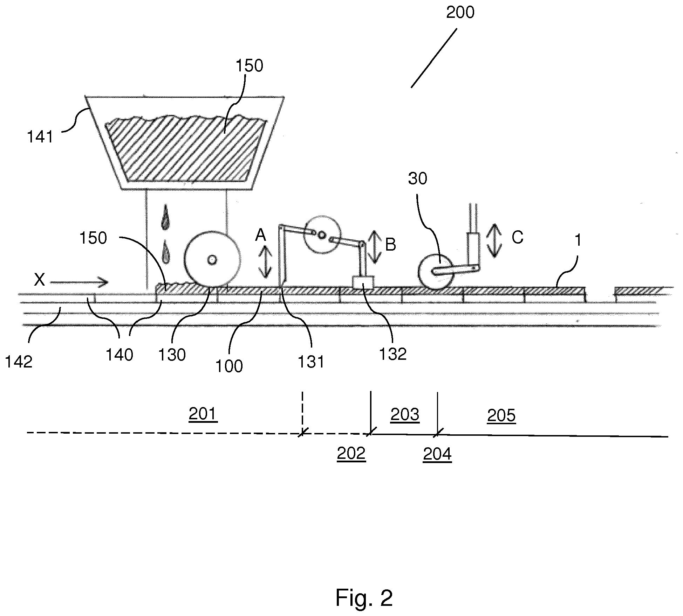

Fig. 1a is a perspective view a roofing tile 1 according to the invention. Fig. 1b is a perspective view of the roofing tile 1 with a solar cell panel 50 mounted thereon and Fig. 1c is a front view of the roofing tile 1 with the solar cell panel 50. The roofing tile 1 has a length direction X, which is the same direction as the process direction of the production process for roofing tiles (see Fig. 2). Further, the roofing tile 1 has a width direction Y, which is a transverse direction relative the length direction X. The roofing tile 1 is defined by a front side 2 and a back side 3, which extends in the width direction Y, and a first long side 4 and a second long side 5, which extends in the length direction X between the front side 2 and the back side 3. The roofing tile 1 further comprises at least one, but in the preferred embodiment, two wave crests 10, 12 and two wave troughs 20, 22, which extends in the length direction X, and a cross-section (along the width direction Y) is wave-shaped. The roofing tile 1 has a first length L_{X} and the wave crests 10, 12 also have the first length L_{X} in the length direction X. In the preferred embodiment both the two wave crests 10, 12 comprise a flat top portion 10a, 12a, which are adapted for the flat solar cell panel 50 and which flat top portions 10a, 12a each has a second length L_{F} in the length direction X of the roofing tile 1.

The flat top portion 10a, 12a of the respective wave crest 10, 12 is arranged with a front end 10ad, 12ad at a first distance d from the front side 2 of the roofing tile 1, and with a back end 10ae, 12ae at a second distance e from the back side 3 of the roofing tile 1. Thereby the second length L_{F} of the flat portion 10a, 12a is shorter than the first length L_{X} of the respective wave crest 10, 12. In the production process (see also Fig.2) a heated roller 30 with a rotation speed similar or higher than a production speed of a conveyer system which transports steel sheet molds filled with non-cured compound of concrete or clay, is controlled to form the flat portions of the wave crests 10, 12. This, by that one roller 30 per wave crest 10, 12, or one wide roller 30, is lowered in the right position, when the non-cured roofing tile passes, which is just a short distance d from the front side 2, and then raised again at position e near the back side 3. By that the flat portions 10a, 12a is formed, preferably with a depth relative the top of the wave crests which substantially is similar to or deeper than the thickness of the flat solar cell panel 50, see Fig. 1c. The first side 4 of the roofing tile 1 comprises upwardly protruding flanges 7 and the second long side 5 comprises grooves 8. The flanges 7 are arranged for cooperation with the corresponding grooves 8 of an adjacent roofing tile 1 in a standard manner. In Fig. 1a-c a support 6 is visible, which support 6 is arranged at the first long side 4 of the roofing tile 1, more or less as an extra flange. The support 6 is arranged for supporting a long side 51 of the solar cell panel 50 which can be seen in Fig. 1b-c and the support 6 extends in the length direction X. A third length L_{S} of the support 6 is preferably at least the same length or longer than as the second length L_{F} of the flat portion 10a, 12a of the at least one wave crest 10, 12.

The roofing tile 1 further comprises a hole 13, which is arranged for solar cell cabling through the roofing tile 1. The cabling (not visible) of each solar cell panel 50 is normally connected to a cabling system and which further is connected to a central unit for collecting the solar energy from the panels. The hole 13 is arranged at the flat portion 10a, 12a in at least one of the wave crests 10, 12, preferably the one closest to the middle of the roofing tile 1.

In Fig. 1b-c is the solar cell panel 50 mounted on the roofing tile 1. This may be done in different ways. After the curing of the adapted roofing tile 1 of Fig. 1a, the solar cell panel 50 will be assembled to the roofing tile 1. Depending on the design of the solar cell panel 50, this may be performed by some type of gluing where glue or similar compound is applied on for example the support 6 and the flat portions 10a, 12a. Another option may be that the solar cell panel 50 is arranged with some kind of bracket on the underside where the hole 13 or another hole is used for a screw and bracket arrangement fitted on the underside of the roofing tile 1, to clamp the solar cell panel 50 to the roofing tile. This alternative may also comprise seals or the like to seal the hole 13 and to provide a "soft" connection between the solar cell panel 50 and the roofing tile 1. Compared to prior art solutions, the eventual seal material, used with the invention is not necessarily of the same color as the roofing tile 1, as in prior art solutions, because the seal/the glue is not visible.

Fig. 2 is a conceptual figure showing the main steps in a production process 200 for producing the roofing tile 1 according to the invention.

The production of a standard roofing tile is based on a continuous casting process where ready-mixed concrete or clay is applied to steel-sheet molds which are transported via a continuous belt principle. The production speed is very high, normally around two tiles/second. The standard roofing tile design, produced by the process, is a traditional type with wave crests and wave troughs. In order to be able to produce the inventive roofing tile 1 adapted for a solar cell panel 50, the existing production line for standard roofing tiles is adapted by some added steps and adjustments of the production flow. By the adaptions explained below it is possible to manufacture both the traditional standard roofing tile and the new adapted variant for solar cell panel in the same process, simply by connecting or disconnecting the equipment for producing the roofing tile 1 adapted for a solar cell panel. The process description below will be explained for a roofing tile made of concrete, but the process is similar for a roofing tile made of clay.

The standard roofing tile process will first be described. Sand and cement are transported into a mixer 141 where water is added which gives a mix of non-cured concrete 150. A conveyor belt 142 supplies in parallel steel sheet molds 140 which are arranged to carry the non-cured concrete 150 during the production process. The production direction X is from left to right in the figure. The mixer 141 dispenses the non-cured concrete 150 via a feeder to the molds 140 and the concrete 150 is then pressed out over the mold 140 with a wave-shaped first roller 130. The now wave-shaped standard roofing 100 tile is thereafter cut with a cutter 131 and transported further to obtain a layer of primer. After this, the standard roofing tiles 100 are transported into a type of rack for storage and further entry into a so-called curing chamber. A full day's production is normally stored in the curing chamber to dry and harden for 24 hours during heating and dehumidification. After this, the concrete roofing tiles 100 are delivered out of the curing chamber, out onto the conveyor belt 142 again. The next step is to separate the cured roofing tile from the steel sheet mold, which will return to into the process again. After inspection, the roofing tiles continue to a spray box to receive its final color. The painted roofing tile 100 is transported into another rack and passes through a heating chamber to dry. Finished roofing tiles are transported further for packing in appropriate bundles which are stacked on a pallet. The pallet with roofing tiles is wrapped with plastic and is normally stored outdoors at least 2 weeks, while the curing process continues to achieve the correct strength.

Returning to Fig. 2, and the added steps for producing the inventive roofing tile 1 adapted for a solar cell panel 50. The first roller 130 may be a bit modified to add the support 6 (see Fig. 1a-c) to the standard flanges 7 of the roofing tile 100. This may also be achieved in other ways by for example adding extra rollers, one for the standard look and one for the adapted look, which preferably may be changed depending on which type of roofing tile to manufacture. The first extra step is after the step of producing 201 a non-cured standard roofing tile 100 having the wave-shape made by the first roller 130 and the cutting of the standard roofing tile 100 into individual tiles 100. This first extra step is punching 202 a hole (hole 13 of Fig. 1a) in the non-cured standard roofing tile 100 with a punching device 132, preferably a conical punching device 132. The punching 202 of the hole 13 may be correlated with the cutting step of into individual tiles as symbolically can be seen as a synchronized motion of cutter 131 and punching device 132. By this, the process is not slowed down by the step of punching the hole. This is followed by the step of receiving 203 a non-cured roofing tile 100 (comprising the hole 13) and then forming 204 the flat top portion (10a, 12a of Fig. 1a) of the wave crests (10, 12 in Fig. 1a) by means of one or two heated second rollers 30. The second roller 30 may be heated by infra-red radiation, induction or the like, to a temperature preferably slightly above 100°C, to avoid clogging or adhering of concrete on the second roller 30. The second roller 30 also rotates with a direction in correspondence to the production direction X and with a speed which is similar or preferably a bit higher than the transport speed of the conveyor belt 142, to make the surface of the flat portions 10a, 12a smooth. Now the adapted roofing tile 1 may continue in the normal process towards the curing 205 of the adapted roofing tile 1, with the transportation further to obtain a layer of primer etc. as described above.

The assembly of the solar cell panel 50 onto the adapted cured roofing tile 1 may take place any time after the roofing tile 1 has gained enough strength in the curing process. The assembly of the solar cell panel 50 is shortly discussed above, in relation to Fig. 1b-c.

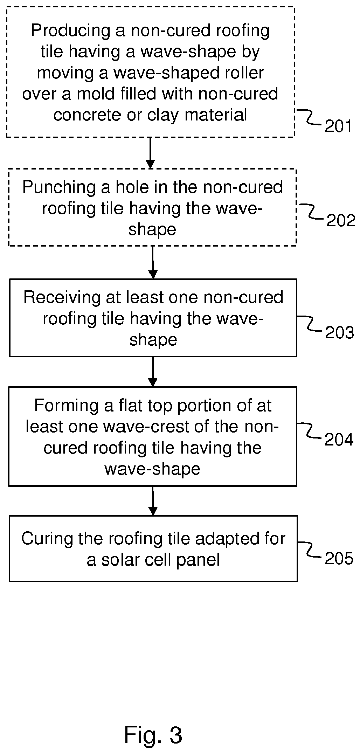

Fig. 3 is a is a flow chart illustrating a method for producing the roofing tile of Fig. 1a and according to the process 200 described above.

Although the description above contains a plurality of specificities, these should not be construed as limiting the scope of the concept described herein but as merely providing illustrations of some exemplifying embodiments of the described concept. Reference to an element in the singular is not intended to mean "one and only one" unless explicitly so stated, but rather "one or more."

## Claims

1. A roofing tile (1) made of concrete or clay, which roofing tile (1) is adapted for a flat solar cell panel (50), the roofing tile (1) having a length direction (X) and a width direction (Y), the roofing tile (1) comprising:
a front side (2) and a back side (3) extending in the width direction (Y),
a first long side (4) and a second long side (5) extending in the length direction (X) between the front side (2) and the back side (3),
at least one wave crest (10, 12) and at least one wave trough (20, 22) extending in the length direction (X), wherein a cross-section along the width direction (Y) is wave-shaped, and wherein the at least one wave crest (10, 12) has a first length (L_{X}) in the length direction (X) of the roofing tile (1), and at least one of the at least one wave crest (10, 12) comprises a flat top portion (10a, 12a) which has a second length (L_{F}) in the length direction (X) of the roofing tile (1).

2. The roofing tile (1) according to claim 1, wherein the second length (L_{F}) of the flat portion (10a, 12a) is shorter than the first length (L_{X}) of the at least one wave crest (10, 12).

3. The roofing tile (1) according to claim 1 or 2, wherein the flat top portion (10a, 12a) of the at least one wave crest (10, 12) is arranged with a front end (10ad, 12ad) at a first distance (d) from the front side (2) of the roofing tile (1).

4. The roofing tile (1) according to any of the preceding claims, wherein the flat top portion (10a, 12a) of the at least one wave crest (10, 12) is arranged with a back end (10ae, 12ae) at a second distance (e) from the back side (3) of the roofing tile (1).

5. The roofing tile (1) according to any of the preceding claims, wherein the roofing tile (1) comprises a hole (13) arranged for solar cell cabling through the same.

6. The roofing tile (1) according to claim 5, wherein the hole (13) is arranged at the flat portion (10a, 12a) of the at least one wave crest (10, 12).

7. The roofing tile (1) according to any of the preceding claims, wherein at least one of the first and second long sides (4, 5) of the roofing tile (1) comprising a support (6) arranged for supporting a long side (51) of a solar cell panel (50), which support (6) extends in the length direction (X) a third length (L_{S}) that is the same length or longer than as the second length (L_{F}) of the flat portion (10a, 12a) of the at least one wave crest (10, 12).

8. A system comprising:
at least one roofing tile (1) according to any of claims 1 - 7,
a flat solar cell panel (50) mounted on a flat top portion (10a, 12a) of the at least one wave crest (10, 12) of the at least one roofing tile (1).

9. A method for producing roofing tiles (1) made of concrete or clay, which roofing tiles (1) are adapted for flat solar cell panels (50), each roofing tile (1) having a length direction (X) and a width direction (Y), the method comprising:
receiving (203) at least one non-cured roofing tile (100) comprising a front side (2) and a back side (3) extending in the width direction (Y), and a first long side (4) and a second long side (5) extending in the length direction (X) between the front side (2) and the back side (3), the non-cured roofing tile (100) further comprising at least one wave crest (10, 12) and at least one wave trough (20, 22) extending in the length direction (X), wherein a cross-section along the width direction (Y) is wave-shaped, and wherein the at least one wave crest (10, 12) has a first length (L_{X}) in the length direction (X) of the roofing tile (100),
after the receiving, forming (204) a flat top portion (10a, 12a) of the at least one wave crest (10, 12) by pressing along a second length (L_{F}) of the at least one wave crest (10, 12) in the length direction (X) of the at least one non-cured roofing tile (100), wherein the pressing forms the flat top portion (10a, 12a) of the at least one wave crest (10, 12) with the second length (L_{F}),
after the pressing, curing (205) the adapted roofing tile (1).

10. The method according to claim 9, wherein the pressing of the flat portion (10a, 12a) starts at a first distance (d) from a front side (2) of the roofing tile (1), such as the wave-shaped is unaffected from the front side (2) and along the first distance (d) of the roofing tile (1).

11. The method according to any of claims 9 - 10, wherein the pressing ends at a second distance (e) from a back side (3) of the roofing tile (1), such as the wave-shaped is unaffected along the second distance (e) to the back side (3) of the roofing tile (1).

12. The method according to any of claims 9 - 11, wherein the pressing is performed with at least one roller (30).

13. The method according to claim 12, wherein the roller (30) is heated.

14. The method according to any of claims 9 - 13, wherein the method further comprising:
before the step of receiving, producing (201) the non-cured roofing tile (100) having the wave-shape by moving a wave-shaped roller (130) over a mold (140) filled with non-cured concrete or clay material (150).

15. The method according to any of claims 9 - 14, wherein the method further comprising:
before the step of receiving, punching (202) a hole (13) in the non-cured roofing tile (100) having the wave-shape.
